# EUROPEAN PATENT APPLICATION

(11) **EP 2 636 972 A1**
(43) Date of publication of application: **11.09.2013**
(21) Application number: 11837391.9
(22) Date of filing: 24.10.2011
(51) Int. Cl.: F25B 21/00, C09K 5/14, B32B 37/12

(54) **MAGNETIC REFRIGERANT BED AND METHOD FOR MANUFACTURING THE SAME**

(30) Priority: 05.11.2010 CN 201010532576
(71) Applicant: Technique Institute of Chemistry And Physics, Chinese Academy of Sciences, Beijing 100190 (CN)
(72) Inventor: SHEN, Jun, Beijing 100190 (CN); WU, Jianfeng, Beijing 100190 (CN); SHEN, Baogen, Beijing 100190 (CN); GONG, Maoqiong, Beijing 100190 (CN); DAI, Wei, Beijing 100190 (CN)
(74) Representative: Schiweck, Weinzierl & Koch
(86) International application number: PCT/CN2011/001771
(87) International publication number: WO 2012/058861

(57) **Abstract**

The present invention provides a magnetic refrigerant bed, which is a column composed of n magnetic refrigerant bed components, and these n magnetic refrigerant bed components are arranged in a descending order according to Curie temperatures or phase transition temperatures of the magnetic refrigeration materials used, wherein n=1-1000. The magnetic refrigerant bed components are flat sheets (1), straight wave-shaped sheets (2) or zigzag wave-shaped sheets (3) which can easily form a magnetic refrigerant bed with high specific surface area and flow channels of low resistance. And a method for manufacturing a magnetic refrigerant bed is also provided, which comprises the following steps: preparing magnetic refrigeration powder materials with Curie temperatures or phase transition temperatures in the operating temperature range of a magnetic refrigerator; and immersing the magnetic refrigeration powder materials into binder respectively; then loading the mixture into molds respectively and pressing the mixture into sheet magnetic refrigerant bed components; then arranging and assembling the obtained components in a descending order according to Curie temperatures or phase transition temperatures of the used magnetic refrigeration materials to obtain a columnar magnetic refrigerant bed. The magnetic refrigerant bed has advantages of large heat transfer specific surface area and small flow resistance of the refrigerant.

## Description

### TECHNICAL FIELD

The present invention relates to the field of refrigeration and cryogenic engineering, especially to a magnetic refrigerant bed and a method for manufacturing the same, namely, the present invention relates to a magnetic refrigerant bed in a certain shape and structure, made from magnetic refrigeration powder materials (magnetocaloric powder materials) according to the use requirement of a magnetic refrigerator, and a method for manufacturing the magnetic refrigerant bed.

### BACKGROUND

The refrigeration equipments such as air-conditioner and refrigerator, have been frequently utilized during people's everyday life and have become the necessities in the modem society. Currently, in the manufacture of the refrigeration equipments, a traditional technology of vapor-compression cycle refrigeration is mainly employed, and this technology is mature and widely applied. However, the refrigerant used in this technology will bring damage to the environment and atmosphere (key measures: Ozone Depletion Potential (ODP) and Global Warming Potentials (GWP)), which has been a global concern for the past three decades. Scientists and engineering technicians of all countries have been exploring the solution to the above problem unceasingly. Currently, there are two generally acknowledged methods for solving the problem: One method is substituting the refrigerant, namely, developing a new refrigerant with ODP of zero and low GWP, in terms of the refrigerant, the ODP of zero can be generally realized in the field of refrigerators, nevertheless, there is no universally acknowledged and perfect solution to improve the performance of the air-condition refrigerant used in largest amounts (the currently proposed refrigerants for substitution either have high GWP or have flammability and so on); the other method is substituting the technology, namely, developing new refrigeration technologies which are absolutely environment-friendly. Among these refrigeration technologies, magnetic refrigeration is considered as one of the most promising alternative technologies. Furthermore, except some special circumstances (e.g. ultra-low temperature), various complicated gas-circulating systems still dominate the cryo-refrigeration field.

The magnetic refrigeration technology implements refrigeration based on the physical phenomena that heat is emitted by the magnetic material to the outside during the magnetization and is absorbed by the magnetic material from the outside during demagnetization. This technology has a high intrinsic thermodynamic efficiency, and the heat transfer circulating fluid used in this technology can be absolutely safe and environment-friendly, thus this technology is also environment-friendly. The study on magnetic refrigeration can be traced back to about 120 years ago. Warburg first observed the heating effect of the metal iron in an applied magnetic field in 1881. In 1895, P.Langeviz discovered the magnetocaloric effect. Two scientists, Debye (in 1926) and Giaugue (in 1927) respectively deduced in theory the conclusion that refrigeration can be realized by adiabatic demagnetization. After that, due to the significant progress on the study of magnetic refrigeration materials (magnetocaloric materials) of paramagnetic salts, the adiabatic demagnetization refrigeration technology developed rapidly in the ultra-low temperature range (∼10⁻⁶K) and low temperature range (below 15K) after 1933. Attributing to the discovery of Gd magnetocaloric effect and first realization of room temperature magnetic refrigeration by Brown in 1976, people's interest in the magnetic room temperature refrigeration was inspired. But due to the limitation of magnetic refrigeration materials, magnets and magnetic refrigeration thermal engineering technology, the overall progress on the room temperature magnetic refrigeration is relatively slow. With the proposing of the conception of Active Magnetic Regenerator (AMR) and the progresses on room temperature magnetic refrigeration materials and system made by Ames national Laboratory and Astronautics Corporation of America in the late 1990s, the magnetic refrigeration technology attracts extensive attention worldwide again.

The magnetic refrigeration technology comprises the following three parts: the magnetic refrigeration material, magnet and magnetic refrigeration thermal engineering system, in which the magnetic refrigeration material is the key. At room temperature, Gd is still the main magnetic refrigerant material used in the magnetic refrigerator up to now owing to its excellent molding and processing performance, but the performances of Gd cannot meet the requirements of refrigeration in practical application. Since 1997, a series of new material systems having giant magnetocaloric effect, such as Gd₅(SiGe)₄ based compounds, Gd₆Co₂Si₃ based compounds, Mn(AsSb) based compounds, MnFe(PAs) based compounds, La(FeM)₁₃ (M=Al or Si) based compounds and interstitial compounds formed by the above compounds with H and/or C atom, have been discovered successively. These novel material systems are advantaged in higher magnetic entropy change. Usually, changing of components can be used to adjust Curie temperatures so as to make up the imperfection that effective operating temperature range of a single component material is not so wide. Nonetheless, these material systems have a common problem that the magnetic refrigerant material prepared in a certain shape are highly prone to pulverization after multiple magnetic refrigeration cycles. In addition, the stronger the first order phase transition feature is, the more serious the pulverization is. In the practical magnetic refrigerator, the magnetic refrigerant material is required to retain the stability of the specific shape and size. If pulverization occurs, it will be unable to maintain the performance of the magnetic refrigerator, and even the magnetic refrigerator cannot work properly.

Astronautics Corporation of USA claimed that they have achieved good results by directly using La(FeSi)₁₃H granular material formed in a certain shape made by another company through sintering process as the magnetic regenerator in the magnetic refrigerator, but they did not explain whether the La(FeSi)₁₃H granular material can keep stable for a long time, nor did they illustrate the ratio of crystal phase and the uniformity of the used material, still less the process for preparing the material, in addition, the application for patent concerning the preparation process is not found. For the material systems with giant magnetocaloric effect described above, on the one hand, forming and sintering process do not have universal applicability; on the other hand, it is difficult to obtain materials with high uniformity and high crystal phase ratio by forming and sintering process, thereby affecting the performance of the magnetic refrigeration material as a magnetic refrigerant.

For the magnetic refrigerator, the largest energy consumption is the driving work of the circulating heat transfer fluid, of which most is used to overcome the flow resistance caused by the circulating heat transfer fluid flowing through the magnetic refrigerant bed. In terms of thermal engineering, on the one hand, it is required that the heat transfer specific surface area of the magnetic refrigerant bed should be as large as possible; on the other hand, it is required that the flow resistance should be as little as possible when the circulating heat transfer fluid flows through the magnetic refrigerant bed. But these two aspects are often contradictory. For example, although the specific surface area is very large when the densely-packed spherical particles are used as the magnetic refrigerant bed, the flow resistance is large. What's more, the smaller the sphere diameter is, the larger the specific surface area is, however the flow resistance is also rising rapidly. Both the theory and experiments prove that applying the form of regular packing can reduce flow resistance significantly without an obvious reduction of heat transfer specific surface area, thereby improving the thermal efficiency of the magnetic refrigerator.

It has been reported in the literature that a certain thickness of sheet made from the metal Gd (which is easily processed and molded directly) by the direct-rolling process is used as the magnetic refrigerant bed of the magnetic refrigerator, but only a simple whole sheet stacked structure is adopted in the above magnetic refrigerant bed. The drawbacks of this method are follows: on the one hand, due to use of a single material, the characteristics of the material are limited; on the other hand, the heat transfer specific surface area of the magnetic refrigerant bed made decreases significantly and the longitudinal heat leakage is large. The above aspects both decrease the refrigeration efficiency of the magnetic refrigerator and make it impossible to achieve temperature span for refrigeration in practical application, and this method is also not suitable for other magnetic refrigeration material systems which are difficult to be shaped.

### SUMMARY

In view of the foregoing problem, the present invention aims to provide a magnetic refrigerant bed and a method for manufacturing a magnetic refrigerant bed, the magnetic refrigerant bed is of regular packing and has the largest possible heat transfer specific surface area and the smallest possible flow resistance caused by the circulating heat transfer fluid flowing through the magnetic refrigerant bed, thereby solving the problem of pulverization of magnetic refrigeration materials, realizing efficient combination of multiple magnetic refrigeration materials conveniently and improving the thermal efficiency of the magnetic refrigerator effectively.

The technological solutions of the present invention are as follows.

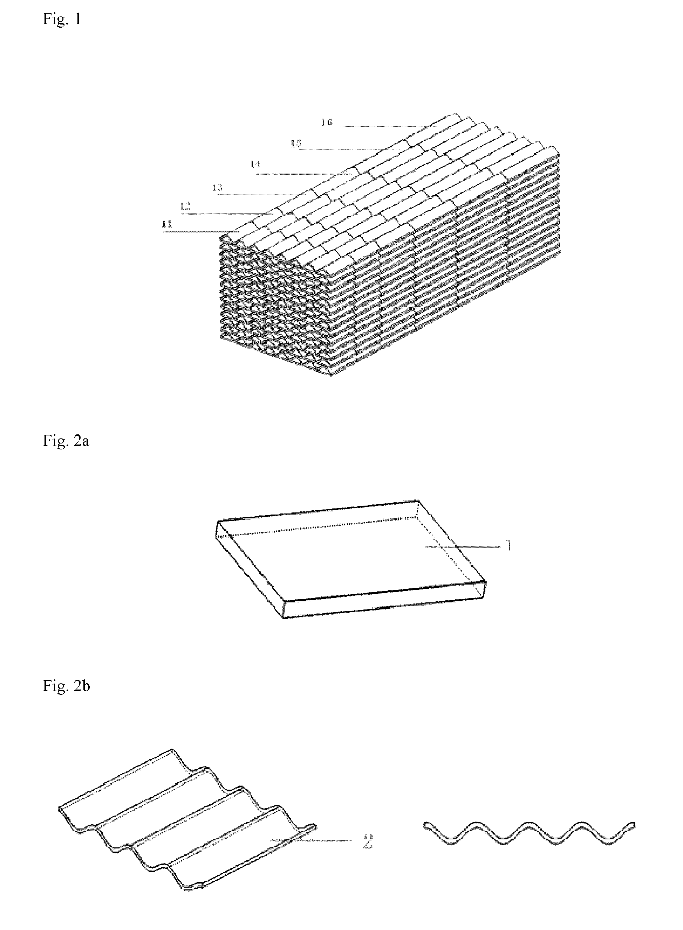

The magnetic refrigerant bed provided by the present invention, as shown in Fig. 1, is a column composed of n magnetic refrigerant bed components, wherein n=1-1000, the n magnetic refrigerant bed components are arranged in a descending order according to Curie temperatures or phase transition temperatures of magnetic refrigeration materials used;
the magnetic refrigerant bed components are in the shape of a flat sheet, straight wave-shaped sheet or zigzag wave-shaped sheet, by which a magnetic refrigerant bed with high specific surface area and flow channels of low resistance can be easily formed, and the magnetic refrigerant bed components have a thickness of 0.1-2.0 mm.

The lengths of the n magnetic refrigerant bed components are identical, partially identical or different from each other.

The column is a column with constant circular section, a column with constant triangular section or a column with constant polygonal section.

The wave is sinusoidal periodic wave or triangular periodic wave, and the ratio between the half peak height of the periodic wave and the thickness of the magnetic refrigerant bed components is 0.5-2.0.

The Curie temperatures or phase transition temperatures of the magnetic refrigeration materials used for making the adjacent magnetic refrigerant bed components of the magnetic refrigerant bed components are the same or different.

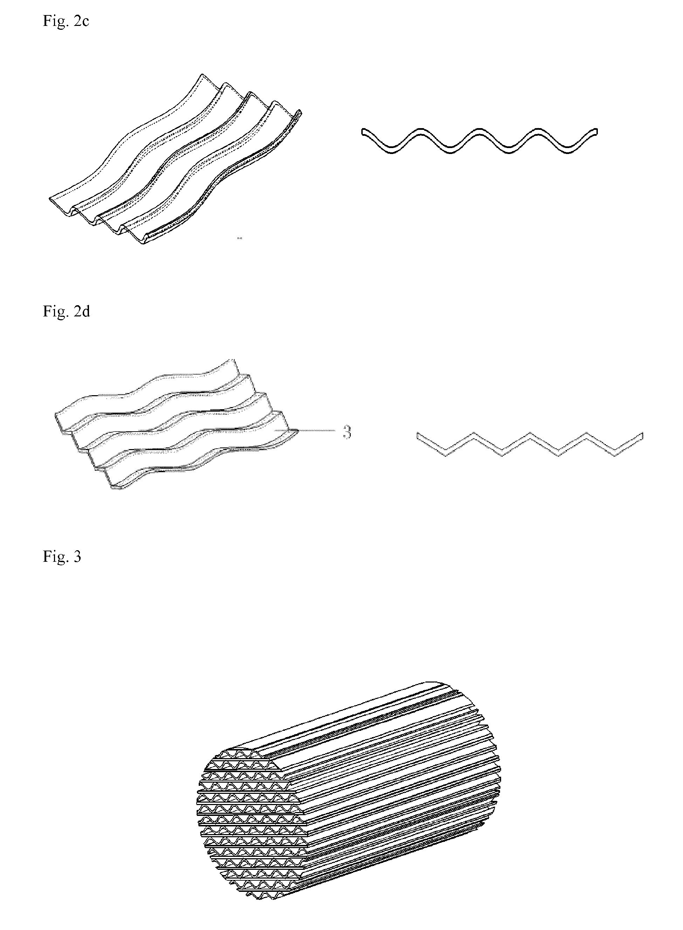

The method for manufacturing a magnetic refrigerant bed, as shown in FIG. 2, includes the following steps:
1) preparing magnetic refrigeration powder materials:
   preparing magnetic refrigeration powder materials with Curie temperatures or phase transition temperatures between the upper limit and lower limit of magnetic refrigerator operating temperature range;
2) preparing sheet magnetic refrigerant bed components:
   immersing the prepared different magnetic refrigeration powder materials uniformly into binder respectively to obtain mixtures containing the magnetic refrigeration powder materials and the binder; then loading the mixtures into molds respectively and pressing the mixtures into sheets; and then demoulding and curing the sheets to form magnetic refrigerant bed components, or further processing the demoulded and cured sheets to form magnetic refrigerant bed components; wherein the sheet magnetic refrigerant bed components are in the shape of a flat sheet, straight wave-shaped sheet or zigzag wave-shaped sheet, by which a magnetic refrigerant bed with high specific surface area and flow channels of low resistance can be easily formed, and the sheet magnetic refrigerant bed components have a thickness of 0.1-2.0 mm;
   wherein the binder is compatible with the immersed magnetic refrigeration powder materials and can be applied in corresponding operating temperature range;
   wherein the binder accounts for 0.1 wt%-10 wt% of the mixture consisting of the magnetic refrigeration powder material and the binder;
3) then arranging and assembling the obtained magnetic refrigerant bed components in a descending order according to Curie temperatures or phase transition temperatures of the used magnetic refrigeration materials to obtain a column-shaped magnetic refrigerant bed.

The lengths of magnetic refrigerant bed components are identical, partially identical or different from each other.

The Curie temperatures or phase transition temperatures of the magnetic refrigeration materials used for making the adjacent magnetic refrigerant bed components of the magnetic refrigerant bed components are the same or different.

The column is a column with constant circular section, a column with constant triangular section or a column with constant polygonal section.

The wave is a sinusoidal periodic wave or triangular periodic wave, and the ratio between the half peak height of the periodic wave and the thickness of the sheet magnetic refrigerant bed components is 0.5-2.0.

The magnetic refrigerant bed manufactured by the method of the present invention has the following advantages:
The magnetic refrigerant bed is of regular packing, so that the magnetic refrigerant bed has the largest possible heat transfer specific surface area and the smallest possible flow resistance caused by the circulating heat transfer fluid flowing through the magnetic refrigerant bed, thereby solving the problem of pulverization of magnetic refrigeration materials, realizing efficient combination of multiple magnetic refrigeration materials conveniently and improving the thermal efficiency of the magnetic refrigerator effectively. Especially when the magnetic refrigeration material of La(FeSi)₁₃H based system is used in the magnetic refrigerant bed, compared with the magnetic refrigerant bed of the same length which is filled with Gd spheres of the same weight, the loss caused by heat transfer resistance of the heat transfer fluid is reduced by nearly 50%, the equivalent integral magnetic entropy is increased by 50% in the magnetic field with field strength of 0-1.5T, and the integral area under the equivalent magnetic entropy change curve between the upper limit of 30 °C and the lower limit of 5 °C of the refrigerator operating temperature span (in this temperature span, it is difficult to obtain an effective refrigerating capacity by using a single refrigerant of Gd) is increased by several times. In conclusion, with the magnetic refrigerant bed of the present invention, the thermal efficiency of the magnetic refrigerator can be improved greatly.

### BRIEF DESCRIPTION OF THE DRAWINGS

FIG. 1 is a schematic diagram illustrating the structure of a magnetic refrigerant bed (Embodiment 5) of the present invention;
FIG. 2a, FIG. 2b, FIG. 2c and FIG. 2d are schematic diagrams respectively showing the shapes of magnetic refrigerant bed components;
FIG. 3 is a schematic diagram of a magnetic refrigerant bed according to Embodiment 1;
FIG. 4 is a schematic diagram of magnetic refrigerant bed components according to Embodiment 2;
FIG. 5 is a schematic diagram of a magnetic refrigerant bed according to Embodiment 3;
FIG. 6 is a schematic diagram of a magnetic refrigerant bed according to Embodiment 4.

### DETAILED DESCRIPTION OF THE INVENTION

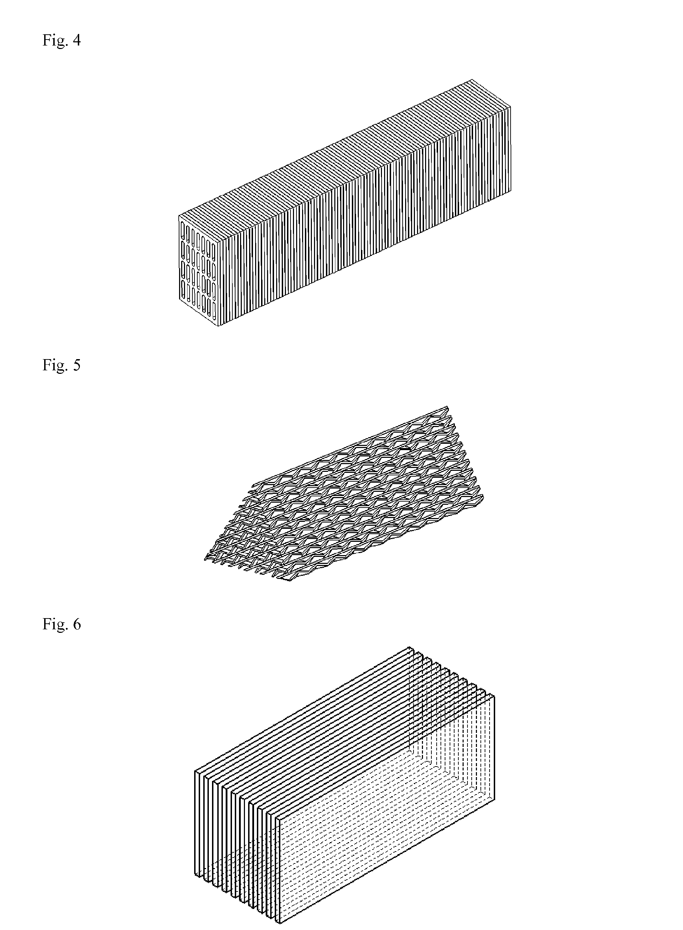

The present invention will be illustrated in detail in combination with accompanying drawings and embodiments:
Embodiment 1: manufacture of an active magnetic regenerative magnetic refrigerant bed of the present invention with an ambient temperature of 30°C and a refrigeration temperature of 25°C
   1) preparing the magnetic refrigeration powder material:
      preparing La(FeSi)₁₃H_{1.5} magnetic refrigeration powder material with the Curie temperature of 27.5°C;
   2) preparing sheet magnetic refrigerant bed components:
      immersing the La(FeSi)₁₃H_{1.5} magnetic refrigeration powder material into phenolic resin uniformly to obtain a mixture containing the La(FeSi)₁₃H_{1.5} magnetic refrigeration powder material and the phenolic resin, wherein the phenolic resin accounts for 10wt% of the mixture; then loading the mixture into molds and pressing the mixture into two kinds of sheets in which one is a flat sheet 1 with the thickness of 0.5 mm (as shown in Fig. 2a) and the other is a straight wave-shaped sheet 2 (as shown in Fig. 2b, the half peak height of the wave is 0.25 mm), and then further processing the two kinds of sheets after performing demoulding and curing, so that the lengths of both two kinds of sheets can be 60.0mm;
   3) putting the straight wave-shaped sheet 2 on top of the flat sheet 1 and then putting the flat sheet 1 on top of the straight wave-shaped sheet 2..., and arranging and stacking up the two kinds of sheets with a length of 60.0 mm in such way to form regular alternating layers of the flat sheet 1 and straight wave-shaped sheet 2, and then processing the alternating layers to obtain a column with constant circular section (as shown in FIG. 3); the column is the active magnetic regenerative magnetic refrigerant bed of the present embodiment with an ambient temperature of 30°C and a refrigeration temperature of 25°C.
**Embodiment 2:** manufacture of an active magnetic regenerative magnetic refrigerant bed of the present invention with an ambient temperature of 30°C and a refrigeration temperature of 5°C
   1) preparing magnetic refrigeration powder materials:
      changing the content of interstitial H by adjusting the process of hydrogen absorption to prepare the following 10 magnetic refrigeration powder materials with Curie temperatures ranging from 7.5°C to 30°C (the interval between respective Curie temperatures is 2.5°C) according to the design requirement of the magnetic refrigerator:
         La(FeSi)₁₃H_{1.05}, La(FeSi)₁₃H_{1.1}, La(FeSi)₁₃H_{1.15}, La(FeSi)₁₃H_{1.2,} La(FeSi)₁₃H_{1.25}, La(FeSi)₁₃H_{1.3}, La(FeSi)₁₃H_{1.35}, La(FeSi)₁₃H_{1.4}, La(FeSi)₁₃H_{1.45} and La(FeSi)₁₃H_{1.5};
   2) preparing sheet magnetic refrigerant bed components:
      immersing the 10 magnetic refrigeration powder materials uniformly into the epoxy resin respectively to obtain 10 mixtures containing different magnetic refrigeration powder materials and the epoxy resin; wherein the epoxy resin in each mixture accounts for 0.1wt% of the corresponding mixture;
      then loading the 10 mixtures into molds respectively and pressing the mixtures into flat sheets with a thickness of 0.1mm; and perforating the flat sheets by laser location after performing demoulding and curing;
   3) then stacking up 100 sheets of the same magnetic refrigeration powder material to form cubic magnetic refrigeration units, such that 10 kinds of sheets containing different magnetic refrigeration powder materials form 10 cubic magnetic refrigeration units with different Curie temperatures; then arranging and stacking up the 10 cubic magnetic refrigeration units with different Curie temperatures in an order from 7.5°C to 30°C (the interval between respective Curie temperatures is 2.5°C) to form a cuboid (as shown in FIG. 4, the pores in each flat sheet of the cuboid are connected); the cuboid is the active magnetic regenerative magnetic refrigerant bed of the present embodiment with an ambient temperature of 32.5°C and a refrigeration temperature of 5°C.
**Embodiment 3:** manufacture of an active magnetic regenerative magnetic refrigerant bed of the present invention with an ambient temperature of 30°C and a refrigeration temperature of 25°C
   1) preparing the magnetic refrigeration powder material:
      changing the content of interstitial C, H by adjusting the process of hydrogen absorption to prepare the La(FeSi)₁₃C_{0.2}H_{1.5} magnetic refrigeration powder material with Curie temperature of 27.5°C according to the design requirement of the magnetic refrigerator;
   2) preparing sheet magnetic refrigerant bed components:
      immersing the La(FeSi)₁₃C_{0.2}H_{1.5} magnetic refrigeration powder material into phenolic resin uniformly to obtain a mixture containing the La(FeSi)₁₃C_{0.2}H_{1.5} magnetic refrigeration powder material and the phenolic resin, wherein the phenolic resin accounts for 5 wt% of the mixture; then loading the mixture into molds and pressing the mixture into two kinds of sheets in which one is a flat sheet 1 with a thickness of 0.1mm and the other is a zigzag triangular wave-shaped sheet 3 with a thickness of 0.1 mm (as shown in Fig. 2d, and the half peak height of the wave is 0.2 mm), and then further processing the two kinds of sheets after performing demoulding and curing, so that the lengths of both two kinds of sheets are 60.0 mm;
   3) according to the requirement of the magnetic refrigerator, putting the zigzag triangular wave-shaped sheet 3 on top of the flat sheet 1 and then putting the flat sheet 1 on top of the zigzag triangular wave-shaped sheet 3..., and arranging and stacking up the two kinds of sheets with a length of 60.0 mm alternately operating in this way to form a combination of regular alternating layers. Then process it to get a column with triangular section (as shown in FIG. 5); the column is the active magnetic regenerative magnetic refrigerant bed of the present embodiment with an ambient temperature of 30°C and a refrigeration temperature of 25°C.
**Embodiment 4:** manufacture of an active magnetic regenerative magnetic refrigerant bed of the present invention with an ambient temperature of 30°C and a refrigeration temperature of 20°C
   1) preparing the magnetic refrigeration powder material:
      preparing the Gd₆Co₂Si₃ magnetic refrigeration powder material with Curie temperature of 25°C;
   2) preparing sheet magnetic refrigerant bed components:
      immersing the Gd₆Co₂Si₃ magnetic refrigeration powder material into the epoxy resin uniformly to obtain a mixture containing the Gd₆Co₂Si₃ magnetic refrigeration powder material and the epoxy resin, wherein the epoxy resin accounts for 5 wt% of the mixture; then loading the mixture into molds and pressing the mixture into flat sheets with a thickness of about 2.0 mm, and then further processing the sheets, so that the lengths of all the flat sheets are 60.0 mm;
   3) stacking up the above sheets to form a column with constant quadrilateral section according to the requirement of the magnetic refrigerator; the column is the active magnetic regenerative magnetic refrigerant bed of the present embodiment with an ambient temperature of 30°C and a refrigeration temperature of 20°C (as shown in FIG. 6).
**Embodiment 5:** manufacture of an active magnetic regenerative magnetic refrigerant bed of the present invention with an ambient temperature of 30°C and a refrigeration temperature of 5°C.
   1) preparing magnetic refrigeration powder materials:
      changing the content of interstitial H by adjusting the process of hydrogen absorption to prepare the following 6 magnetic refrigeration powder materials containing different components with Curie temperatures ranging from 5°C to 30°C (the interval between respective Curie temperatures is 5°C), according to the design requirement of the magnetic refrigerator; namely, the first magnetic refrigeration powder material is La(FeSi)₁₃H_{1.0}; the second magnetic refrigeration powder material is La(FeSi)₁₃H_{1.1}; the third magnetic refrigeration powder material is La(FeSi)₁₃H_{1.2}; the fourth magnetic refrigeration powder material is La(FeSi)₁₃H_{1.3}; the fifth magnetic refrigeration powder material is La(FeSi)₁₃H_{1.4}; and the sixth magnetic refrigeration powder material is La(FeSi)₁₃H_{1.5};
   2) preparing sheet magnetic refrigerant bed components:
      immersing the above 6 magnetic refrigeration powder materials uniformly into the epoxy resin respectively to obtain 6 mixtures containing different magnetic refrigeration powder materials and the epoxy resin; wherein the epoxy resin in each mixture accounts for 5 wt% of the corresponding mixture;
      then loading each mixture into molds and pressing the mixture into two kinds of sheets in which one is a flat sheet with a thickness of 0.5 mm and the other is a straight wave-shaped sheet with a thickness of 0.5 mm (the half peak height of the wave is 0.5 mm); then processing the sheets after performing demoulding and curing, so that the lengths of two kinds of sheets made from the first magnetic refrigeration powder material and that of two kinds of sheets made from the second magnetic refrigeration powder material are all 9.0 mm; the lengths of both two kinds of sheets made from the third magnetic refrigeration powder material are 12.0 mm; the lengths of both two kinds of sheets made from the fourth magnetic refrigeration powder material are 15.0 mm; the lengths of two kinds of sheets made from the fifth magnetic refrigeration powder material and the lengths of two kinds of sheets made from the sixth magnetic refrigeration powder material are all 18.0 mm;
3) putting the straight wave-shaped sheet on top of the flat sheet and then putting the flat sheet on top of the straight wave-shaped sheet..., and assembling the two kinds of sheets made from each material in such way to form a magnetic refrigeration unit with the two kinds of sheets arranged alternately; namely, the two kinds of sheets made from the first magnetic refrigeration material are made into a magnetic refrigeration unit 11 shown in FIG. 1; the two kinds of sheets made from the second magnetic refrigeration material are made into a magnetic refrigeration unit 12 shown in FIG. 1; the two kinds of sheets made from the third magnetic refrigeration material are made into a magnetic refrigeration unit 13 shown in FIG. 1; the two kinds of sheets made from the fourth magnetic refrigeration material are made into a magnetic refrigeration unit 14 shown in FIG. 1; the two kinds of sheets made from the fifth magnetic refrigeration material are made into a magnetic refrigeration unit 15 shown in FIG. 1; and the two kinds of sheets made from the sixth magnetic refrigeration material are made into a magnetic refrigeration unit 16 shown in FIG. 1;
   then stacking up the magnetic refrigeration unit 11, magnetic refrigeration unit 12, magnetic refrigeration unit 13, magnetic refrigeration unit 14, magnetic refrigeration unit 15 and magnetic refrigeration unit 16 in turn to form the magnetic refrigerant bed of the present embodiment with a length of 81mm.

Based on the above description, the magnetic refrigerant bed of the present invention can also be made into a honeycomb briquette-shaped magnetic refrigerant bed by using a single magnetic refrigeration material with a certain Curie temperature.

The magnetic refrigerant bed manufactured by the method of the present invention has the following advantages:
the magnetic refrigerant bed is of regular packing so that the magnetic refrigerant bed has the largest possible heat transfer specific surface area and the smallest possible flow resistance caused by the circulating heat transfer fluid flowing through the magnetic refrigerant bed, thereby solving the problem of pulverization of magnetic refrigeration materials, realizing efficient combination of multiple magnetic refrigeration materials conveniently and improving the thermal efficiency of the magnetic refrigerator effectively. Especially when the magnetic refrigeration material of La(FeSi)₁₃H based system is used in the magnetic refrigerant bed, compared with the magnetic refrigerant bed of the same length which is filled with Gd spheres of the same weight, the loss caused by heat transfer resistance of the heat transfer fluid is reduced by nearly 50%, the equivalent integral magnetic entropy is increased by 50% in the magnetic field with field strength of 0-1.5T, and the integral area under the equivalent magnetic entropy change curve between the upper limit of 30°C and the lower limit of 5°C of the refrigerator operating temperature span (in this temperature span, it is difficult to obtain an effective refrigerating capacity by using a single refrigerant of Gd) is increased by several times. In conclusion, with the magnetic refrigerant bed of the present invention, the thermal efficiency of the magnetic refrigerator can be improved greatly.

## Claims

1. A magnetic refrigerant bed, which is a column composed of n magnetic refrigerant bed components, wherein n=1-1000, the n magnetic refrigerant bed components are arranged in a descending order according to Curie temperatures or phase transition temperatures of magnetic refrigeration materials used;
the magnetic refrigerant bed components are in the shape of a flat sheet, straight wave-shaped sheet or zigzag wave-shaped sheet, by which a magnetic refrigerant bed with high specific surface area and flow channels of low resistance can be easily formed, and the magnetic refrigerant bed components have a thickness of 0.1-2.0 mm.

2. The magnetic refrigerant bed according to claim 1, wherein the lengths of the n magnetic refrigerant bed components are identical, partially identical or different from each other.

3. The magnetic refrigerant bed according to claim 1, wherein the column is a column with constant circular section, a column with constant triangular section or a column with constant polygonal section.

4. The magnetic refrigerant bed according to claim 1, wherein the wave is sinusoidal periodic wave or triangular periodic wave, and the ratio between the half peak height of the periodic wave and the thickness of the magnetic refrigerant bed component is 0.5-2.0.

5. The magnetic refrigerant bed according to claim 1, wherein the Curie temperatures or phase transition temperatures of the magnetic refrigeration materials used for making the adjacent magnetic refrigerant bed components of the magnetic refrigerant bed components are the same or different.

6. A method for manufacturing a magnetic refrigerant bed, comprising the following steps:
1) preparing magnetic refrigeration powder materials:
preparing magnetic refrigeration powder materials with Curie temperatures or phase transition temperatures between the upper limit and lower limit of magnetic refrigerator operating temperature range;
2) preparing sheet magnetic refrigerant bed components:
immersing the prepared different magnetic refrigeration powder materials uniformly into binder respectively to obtain mixtures containing the magnetic refrigeration powder materials and the binder; then loading the mixtures into molds respectively and pressing the mixtures into sheets; and then demoulding and curing the sheets to form magnetic refrigerant bed components, or further processing the demoulded and cured sheets to form magnetic refrigerant bed components; wherein the sheet magnetic refrigerant bed components are in the shape of a flat sheet, straight wave-shaped sheet or zigzag wave-shaped sheet, by which a magnetic refrigerant bed with high specific surface area and flow channels of low resistance can be easily formed, and the sheet magnetic refrigerant bed components have a thickness of 0.1-2.0 mm;
wherein the binder is compatible with the immersed magnetic refrigeration powder materials and can be applied in corresponding operating temperature range;
wherein the binder accounts for 0.1 wt%~10 wt% of the mixture consisting of the magnetic refrigeration powder material and the binder;
3) then arranging and assembling the obtained magnetic refrigerant bed components in a descending order according to Curie temperatures or phase transition temperatures of the magnetic refrigeration materials used to obtain a column-shaped magnetic refrigerant bed.

7. The magnetic refrigerant bed and its preparation method according to claim 6, wherein the lengths of magnetic refrigerant bed components are identical, partially identical or different from each other.

8. The magnetic refrigerant bed and its preparation method according to claim 6, wherein the Curie temperatures or phase transition temperatures of the magnetic refrigeration materials used for making the adjacent magnetic refrigerant bed components of the magnetic refrigerant bed components are the same or different.

9. The magnetic refrigerant bed and its preparation method according to claim 6, wherein the column is a column with constant circular section, a column with constant triangular section or a column with constant polygonal section.

10. The magnetic refrigerant bed and its preparation method according to claim 6, wherein the wave is a sinusoidal periodic wave or triangular periodic wave, and the ratio between the half peak height of the periodic wave and the thickness of the sheet magnetic refrigerant bed component is 0.5-2.0.
